# EUROPEAN PATENT SPECIFICATION

(11) **EP 4 362 389 B1**
(45) Date of publication and mention of the grant of the patent: **20.08.2025**
(21) Application number: 22020511.6
(22) Date of filing: 24.10.2022
(51) Int. Cl.: H04L 9/40, H04W 8/18, H04W 8/20, H04W 12/30, H04W 12/42, H04W 12/08

(54) **PROFILE PROVISIONING PLATFORM**
PROFILBEREITSTELLUNGSPLATTFORM
PLATE-FORME DE FOURNITURE DE PROFIL

(43) Date of publication of application: 01.05.2024
(73) Proprietor: Giesecke+Devrient Mobile Security Germany GmbH, 81677 München (DE)
(72) Inventor: Badawy, Waleed, 81679 München (DE); Körber, Frank, 82140 Olching (DE); Patel, Nirmalkumar Vasant, 411061 Pune (IN); Ruiz Litwinski, David, 141-69 Huddinge (SE)
(74) Representative: Giesecke+Devrient IP

(56) References cited:
- WO-A1-2021/058933
- US-A1- 2022 086 621
- UNKNOWN: "RSP Technical Specification version 3.0", 19 October 2022 (2022-10-19), XP093005219, Retrieved from the Internet <URL:https://www.gsma.com/esim/wp-content/uploads/2022/10/SGP.22-v3.0-1.pdf> [retrieved on 20221206]

## Description

### Field of the invention

The present invention relates to a profile provisioning platform, and to methods for provisioning data to said platform, and for operating said platform.

### Background of the invention and prior art

Mobile devices, being devices able to communicate in a mobile network, are known in use cases covering the M2M sector, particularly the Automotive an industrial sectors, and the Consumer sector. A mobile device includes a Universal Integrated Circuit Card, UICC, including one or several profiles, each profile owned by a Mobile Network Operator, MNO, and assigned to a mobile device owner and to a mobile network, and including authentication information for authenticating the mobile device owner versus the mobile network of the MNO. The MNO usually has agreements with other MNOs, allowing the mobile device user the usage also of other mobile networks under defined conditions.

For an UICC, different form factors are known, for example a Plug-In SIM card, a soldered in embedded UICC, eUICC, or an all-Software eSIM or an integrated iUICC implemented in a chip of the mobile device. Thus, UICC can be for example a SIM card, an eUICC, an iUICC or an eSIM.

Up-to-date UICCs allow the provisioning of profiles in the UICC from a profile provisioning platform operated by a profile manufacturer. The provisioning can include for example loading and installing profiles from the profile provisioning platform to the UICC, amending already present profiles and deleting profiles, amending a status of present profiles, for example enabling and disabling profiles.

Profile provisioning platforms are described in the GSMA specifications SGP.02 and SGP.22, particularly versions [1] SGP.02-v4.2, Remote Provisioning Architecture for Embedded UICC Technical Specification, Version 4.2, 07 July 2020, and [2] SGP.22-v2.2.2, SGP.22 RSP Technical Specification, Version 2.2.2, 05 June 2020.

The provisioning platform disclosed in [1] SGP.02-v4.2, aiming particularly at M2M use cases such as Automotive and industrial use cases, comprises a profile preparation server SM-DP, Subscription-Manager Data-Preparation, and a profile provisioning server SM-SR, Subscription-Manager Secure-Router. The provisioning platform disclosed in [2] SGP.22-v2.2.2, aiming particularly at Consumer devices such as smartphones and the like, comprises a profile server SM-DP+, Subscription-Manager Data-Preparation-Plus, combining in itself the functions of a profile preparation server SM-DP and a profile provisioning server SM-SR. Thus, mention of a profile preparation server can be directed to for example either an SG.02 SM-DP (M2M use cases) or a SGP.22 SM-DP+ (Consumer use cases), in both cases addressing the data preparation functionality.

The profile preparation server SM-DP or SM-DP+ includes or cooperates with a data generation instance IDSP operated by the profile manufacturer operating the profile preparation server. The data generation instance IDSP receives profile data provided by a profile provider, for example a mobile network operator MNO, and processes the provided profile data and further data so as to contribute to generating a profile that can be installed to a UICC. The output of the data generation instance IDSP is personalization data that, when installed in a UICC, install in the UICC a profile with the profile data that was provided from the profile provider.

The profile data is an individual set of data of a particular profile required for later usage of the profile in its destined to purpose of authentication in the target mobile network. The profile data include as three important elements an International Mobile Subscriber Identity IMSI and an authentication key Ki, profile number ICCID (the abbreviation stands for Integrated Circuit Card Identifier, since historically a UICC card contained only one profile, so the profile was logically identical to the physical UICC card), all usually provided by the MNO of the target mobile network.

A data set which is also described in for example [1] SGP.02 is the so called eUICC Information Set, or briefly EIS, which is a set of eUICC information data or eUICC metadata. The EIS according to [1] SGP.02 contains, for example, information about which profiles are installed in an eUICC and about the status of the profiles, particularly which profile is or are active or enabled, and which profile is or are disabled, communication keys for communication over the ES5 interface, and others.

When a data generation instance IDSP according to [1] SGP.02 generates, from profile data, a profile for a target eUICC, it also retrieves from the target eUICC the EIS. The profile and the EIS are stored to the SM-DP. When the profile shall be downloaded to the eUICC, the profile is transferred from the SM-DP to the SM-SR and downloaded from the SM-SR to the eUICC.

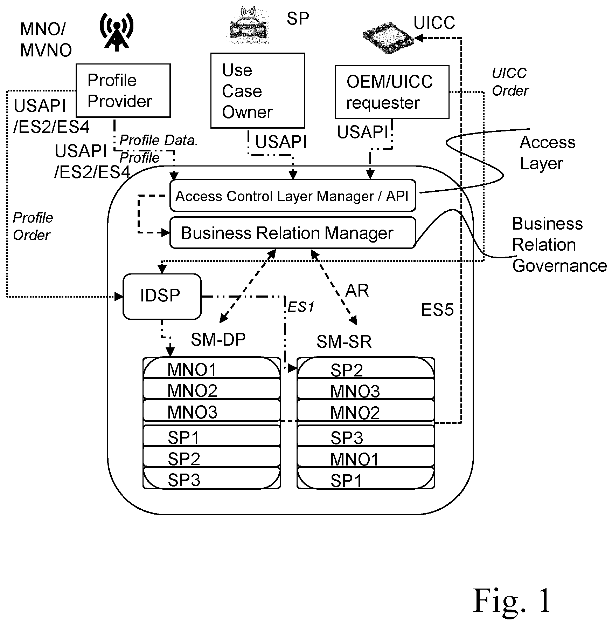

Profile provisioning, so as to provide profiles to UICCs, includes three roles, namely, first, a profile provider which provides profile data destined for generation of a profile, second, a UICC requester which requests, by a UICC order, a UICC and, by a profile order, requests one or several profiles to be installed in the UICC, and, third, a use case owner who provides a framework for hosting the UICC with the one or several profiles. In the setup of the profile provisioning platform according to [1] SGP.02, as visible from Figure 1, the profile provider interface is provided by interface ES4. A UICC requester is provided with downloaded profiles by interface ESS.

In an M2M Automotive environment, the profile provider can be an MNO, herein a real MNO or a virtual MNO, MVNO. The UICC requester can be a manufacturer or provider of an Automotive mobile device included in the car, the Automotive mobile device hosting a UICC. The use case owner can be the car manufacturer providing the car with the Automotive mobile device.

In a consumer environment, the profile provider can be an MNO, which can be a real MNO or an MVNO, the UICC requester can be a UICC manufacturer, and the use case owner can be a smartphone manufacturer.

In the classical current profile provisioning landscape, a profile provisioning platform is fixedly assigned to a particular set of a profile provider, e.g. MNO, (Role 1) UICC requester (Role 2) and use case owner (Role 3).

The profile provider is the owner of profiles in the profile provisioning platform. Many pieces of information required for ordering a profile for a use case of a use case owner and downloading the ordered profile to a target UICC require exchange of information on the profile and the UICC, for example ICCID of the profile, or EID of the UICC.

A typical use case of a mobile device in an Automotive environment is an Automotive mobile device included in a car of a carmaker. The Automotive mobile device includes a UICC including at least one profile owned by a particular MNO. The profile enables the Automotive mobile device to communicate in the mobile network of the MNO owning the profile. For provisioning profiles to and in the UICC of the Automotive mobile device, a profile provisioning platform including a profile preparation server SM-DP, the SM-DP including or cooperating with a data generation instance IDSP, and a Secure Router SM-SR is used. The request to download a profile to the UICC can be made by the MNO (profile provider), or by the carmaker (use case owner).

A different carmaker makes use of a different profile provisioning platform, also including the full set of profile preparation server SM-DP, including or cooperating with a data generation instance IDSP, and a Secure Router SM-SR, even if the MNO is the same.

From the view of a Mobile Network Operator, MNO, similar profiles are provided to different carmakers, herein making use of a separate profile provisioning platform for each carmaker, even though some elements of the separate profile provisioning platform might be similar in each of separate the platforms.

In case an MNO intends to cooperate with a new carmaker, an entire new profile provisioning platform has to be set up, resulting in high costs and a long time-to-market when adding new cooperation partners to a profile provisioning infrastructure. In addition, every new setting up of a profile provisioning platform is prone to errors, as compared to continuing operation of an established profile provisioning platform. Also, having to maintain a large number of distinct profile provisioning platforms increases the risk that errors occur during operation and/or on the occasion of maintenance.

The document [3] WO2019067244A1 from the prior art discloses an eSIM management framework of an MNO managing several distinct profile preparation platforms of several distinct UICC manufacturers, EUMs. The eSIM management framework of the MNO has access to all of the several distinct profile preparation platforms, and to several use case owners, called Partners.

Document [4] US2022/086621A1 from the prior art discloses an eSIM management framework having a profile database, a profile provider interface, a use case owner interface referred to as third party partner and allowing a use case owner to exchange data with the profile database.

### Objective of the invention

It is an object of the present invention to provide a profile preparation platform that can support to reduce complexity, avoid errors in setup, operation and/or maintenance, and that can support to reduce costs and time-to-market.

### Summary of the invention

The object of the invention is achieved by a profile preparation platform with the following features, according to claim 1. Embodiments of the invention are presented in dependent claims.

The profile provisioning platform comprises:
- a profile database storing data related to a profile for an UICC;
- at least one profile provider interface allowing a profile provider to exchange data with the profile database;
- at least one use case owner interface allowing a use case owner to exchange data with the profile database;
- at least one UICC requester interface allowing a UICC requester to exchange data with the profile database, said exchange including at least to request profiles and receive profiles from the profile database.

The profile provisioning platform is characterized in that, at one of the at least one UICC requester interfaces, said exchange of data includes:
--- to provide a UICC request to the database, or/and
--- to provide metadata or other formal information on a UICC to the database,
--- to provide an EIS of a UICC to the database.

Herein, the UICC requester provides UICC information, for example in preparation of a profile download to a UICC; and is
characterized by:
- a business relation manager managing access of the different profile providers, use case owners and UICC requesters to data in the profile database based on access rules related to the data.

The business relation manager allows to grant access to the profile provisioning platform by all three roles of the profile provider, the use case owner and the UICC requester, without requiring exchange of required information via alternative channels, like mailings or the like outside the profile provisioning platform.

By this, the complexity of operating the profile provisioning platform is reduced, which can help to avoid errors in setup, operation and/or maintenance, and can support to reduce costs and time-to-market of the platform and updates to it.

According to embodiments, the profile database allows access by at least two different profile providers or/and at least two different use case owners or/and at least two different UICC requesters.

By allowing access to data in the profile database by different profile providers, use case owners and UICC requesters under management of the business relation manager, similar elements or pieces of data contained in the data of the database have to be provided only once by some party, e.g. a profile provider, use case owner or UICC requester, and can be used in a shared way by all parties having access rights to said element or piece of data. The access rules herein ensure a controlled access to the data.

By this, a smaller number of overall elements or pieces of data is provided as compared to providing a separate full profile provisioning platform for every combination of different profile providers, use case owners and UICC requesters.

By this, the size and complexity is reduced, and thus the risk of errors occurring during operation and maintenance of the profile provisioning platform is reduced. In addition the effort, risk of failure, costs and time-to-market when adding new different profile providers, use case owners or UICC requesters are reduced.

According to some embodiments, the business relation manager applies, as a type of access rules, a set of business relation governance rules so as to allow or disallow access of certain profile providers, use case owners and UICC requesters to data in the profile database, particularly access to data provided by a party, namely profile provider, use case owner or UICC requester, different from the accessing party, namely profile provider, use case owner or UICC requester.

The business relation governance rules can for example include the following.

A business relation governance rules can be or imply a rule that ensures that a data requesting party having a contractual or other conflict to receive data from a data provisioning party is disallowed to receive data from said provisioning party. The contractual or other conflict can for example be a contract or other issue between the data requesting party and a third party or applicable to the data requesting party, wherein the data providing party is included as a blocked party.

A business relation governance rules can be or imply a rule that ensures that data provided from a data provisioning party having a contractual or other conflict to provide or deliver data to a blocked possible data requesting party are disallowed to be provided to said blocked possible data requesting party. The contractual or other conflict can for example be a contract or other issue between the data providing party and a third party or applicable to the data providing party, in which the data requesting party is included as a blocked party.

A party can for example be blocked due to contract or due to law or court action.

According to some embodiments of the profile provisioning platform, at one of the at least one profile provider interfaces, said exchange of data includes:
--- to provide profile data to the database, particularly provide an ICCID of a profile or/and a EID of a chip to the database, or/and
--- to provide profiles to the profile database.

Herein, the profile provider acts as a donor or profile data or/and donor of profiles.

According to some embodiments of the profile provisioning platform, at any one of the at least one profile provider interfaces or/and the at least one use case owner interfaces, said exchange of data includes:
--- to provide a profile order or a UICC order to the profile database, wherein the profile order can include profile data, particularly an ICCID of a profile or/and an EID of a UICC, or/and
--- to retrieve profile data from the database, particularly retrieve an ICCID of a profile or/and an EID of a UICC from the database.

Herein, the profile provider or the use case owner inputs or retrieves profile information or/and UICC information, for example in preparation of a profile download to a UICC.

As set out above, the profile provisioning platform, at one of the at least one UICC requester interfaces, said exchange of data includes:
--- to provide a UICC request to the database, or/and
--- to provide metadata or other formal information on a UICC to the database,
--- to provide an EIS of a UICC to the database.

Herein, the UICC requester provides UICC information, for example in preparation of a profile download to a UICC.

According to some embodiments of the profile provisioning platform, referring to the interfaces:
- at least one profile provider interface is provided as an interface ES4 or ES2 according to GSMA SGP.02 or SGP.22; and/or
- at least one UICC requester interface is provided by a proprietary interface USAPI; and/or
- at least one use case owner interface is provided by a proprietary interface USAPI. Currently, the profile providers or MNOs are allowed to use the SGP.02 ES2 or ES4 interface, and use case owners and UICC requester are not allowed to use the SGP.02 ES2 or ES4 interface, and instead make use of a proprietary USAPI interface.

Provided it is allowed, alternatively, the use case owners or/and UICC requester may make use of an SGP.02 ES2 or ES4 interface.

According to some embodiments of the invention, the proprietary interface USAPI, Universal API, Universal Application Programming Interface, provides at least a functionality allowing to an owner of a the interface a delegation to a partner, such that the interface owner and one or several partners (delegates) can each use the interface.

According to embodiments of the invention, the proprietary interface USAPI is a JSON based Representational State Transfer, REST, interface.

According to some embodiments, the profile provisioning platform comprises one or several of the following elements, in similarity to the SGP.02 architecture:
- a data generation instance allowing two or more different profile providers to input profile data for data generation, i.e. the generation of a profile in a format of personalization data directed to installing a profile in a UICC;
- a data preparation server allowing two or more different profile providers to input profile data for data preparation, i.e. the preparation of the readily generated profile for transport and download to the UICC, which can particularly include the generation of a profile package which can include the profile in form of personalization data;
- a secure router allowing two or more UICC requesters to request profiles and receive profiles, wherein the profiles may be contained in profile packages.

At least one of the three roles (role profile provider, role use case owner, role UICC requester) is occupied by two or more different role holders. This can be achieved in that at least one of the above three instances (data generation instance, data preparation server, secure router) allow two or more role holders to access. Further of the three instances can be implemented also to allow two or more accessors, or only one accessor.

According to some embodiments, data provisioned to the profile provisioning platform with the above described architecture are stored to the data generation instance or the data preparation server.

According to some embodiments, data output from the profile provisioning platform with the above described architecture in reply to a request for data are output from the secure router.

According to some embodiments, requests for data received at the profile provisioning platform with the above described architecture are physically received at the secure router.

On a logical level, the business relation manager ensures that when storing data also access rules for said data are stored and implemented. The business relation manager also ensures on a logical level, that when data are requested to be output, the stored and implemented access rules are followed.

Preferably, the profile provisioning platform further comprises an access control layer manager managing physical access of profile providers, use case owners and UICC requesters to the profile provisioning platform.

The access control layer, managed by the access control layer manager, enables physical access of profile providers, use case owners and UICC requesters to the profile provisioning platform. The access control layer can be or comprise one or several of the following:
- an Application Programing Interface, API;
- a Graphical User Interface, GUI;
- a file exchange interface constructed to exchange files, particularly receive batch files including a batch of several commands to be executed by the profile provisioning platform or by a UICC in communication with the profile provisioning platform.

According to some embodiments, the access rules include that access to data is allowed to an owner of the data and to partners, if any, of the owner of the data. The owner of the data is for example a party provisioning data and data access rules to the profile provisioning platform, for storing the data to the profile database, and implementing the access rules to the business relation manager. The partner can for example be a party having interest to request, in the future, download of profiles generated with the data. According to some embodiments, the access rules include a Whitelist of partners, and/or of partners of partners, for which access to data is allowed.

According to some embodiments, an identifier of the owner of the data and identifiers of the partners are stored in data information fields related to the data. According to some embodiments, an identifier of a partner is stored in a data information field related to a delegate of the owner of the data.

According to some embodiments, the profile provisioning platform further is characterized in that: - the profile database allows access by at least two different profile providers or/and at least two different use case owners or/and at least two different UICC requesters.

The data related to a profile for a UICC is or comprises, according to embodiments of the invention, either one or several of:
- profile data required to generate a profile - herein can be included at least the International Mobile Subscriber Identity IMSI, the Authentication key Ki, and the profile number ICCID;
- one or several profiles;
- one or several eUICC Information Sets, EISs, or one or several sets of metadata related to an UICC, particularly metadata similar to an EIS.

The profile data required to generate a profile, the profiles, and the EIS or similar metadata, are, by means of the access rules managed by the business relation manager, accessible by the owner of the data, and in addition by further parties. The further parties can, for example, be partners or delegates, as stored in the owner data field or partner/delegate data field of the profile, or in the owner data field or partner/delegate data field of the EIS.

A method for provisioning data to a profile provisioning platform according to the invention presented herein comprises the steps:
- at one or several interfaces, selected from the profile provider interface, the use case owner interface and the UICC requester interface, receive data and access rules related to the data;
- store the received data to the profile database;
- implement the received access rules to the business relation manager.

Irrespective of if a profile provisioning platform used by only one party or several parties, also general security measures are recommendable to secure the profile provisioning platform against abusive intrusion or access.

In the presently provided profile provisioning platform allowing several parties to access the profile provisioning platform, the business relation manager ensures secure management of data in the profile provisioning platform. The several parties can be the three role holders, or in an extended version in addition multiple holders of the same role.

By the method according to the present invention, a party which can be a profile provider, e.g. an MNO or MVNO, a use case owner which can be an OEM like a carmaker or industrial device maker or smartphone maker, or a UICC requester who can be an Automotive or M2M mobile device maker or a UICC manufacturer, can provide data to the database, and prescribe by access rules, which party or parties are allowed to access the provided data later. For example, a party providing data to the database can prescribe that itself and some further defined parties are allowed to access the data, and which parties are disallowed to access the data.

According to some embodiments, the data provisioned to the profile provisioning platform are or comprise profile data and are provided to the profile provisioning platform at a profile provider interface.

In this case, the access rules effect that, when a party requests delivery of a profile via the UICC requester interface, only parties allowed to access the data are able to request a profile from the profile provisioning platform, and afterwards get delivered a profile that was generated making use of those particular profile data. A party not allowed to access the profile data might have allowance to request delivery of a profile to its UICC, and get delivered a profile to its UICC, however the profile then has to be generated excluding the particular profile data, however making use only of other profile date, for which the data providing party set no restrictions against this particular requesting party, or allowed the requesting party to access the profile data.

A method for operating a profile provisioning platform according to the invention presented herein comprises the steps:
- at an interface, selected from the profile provider interface, the use case owner interface and the UICC requester interface, receive from a requesting party, being a profile provider, a use case owner or a UICC requester, a request for data to be output from the profile provisioning platform to a specified output interface;
- at the business relation manager, verify the access rules, and output the requested data only under the condition the access rules allow providing the requested data to the specified output interface.

According to some embodiments, the specified output interface, at which the data are requested to be output, is implicitly specified in that it is the same interface at which the request for data output is received. For example, a UICC requester can request at the UICC request interface that a profile shall be provided to its UICC via the UICC requester interface. In other words, a party can at an interface request a profile for itself.

According to some embodiments, the specified output interface, at which the data are requested to be output, is explicitly specified as a particular interface, which can be either the interface at which the request is received, or a different interface. In other words, a party can at an interface request a profile on behalf of another party which communicates with the profile provisioning platform via a different interface.

According to some embodiments, the request for data is a profile order, and the requested data is or comprises a profile to be provided to a target UICC.

A specified output interface to which the profile shall be output is preferably an interface to the target UICC, for example an SGP.02 ES5 interface.

The role of a profile provider which provides profile data can be filled for example by: a Mobile Network Operator, MNO; a virtual Mobile Network Operator, MVNO.

The role of a use case owner can be filled for example by: a Service Provider like for example a carmaker like BMW, Audi, Volvo, ...; or a provider of a Smart Industrial or Smart Home Architecture; or a Smartphone maker like Apple, Samsung, ...; or a UICC requester.

The role of a UICC requester can be filled for example by: an Automotive device maker like Bosch, Continental, ...; a Smart Industrial or Smart Home mobile device maker; a UICC manufacturer or chipmaker.

### Brief description of the drawings

Embodiments of the invention will now be described with reference to the accompanying drawings, throughout which like parts are referred to by like references, and in which represents:
- Fig. 1: a profile provisioning platform according to an embodiment of the invention;
- Fig. 2: a setup of four profile provisioning platforms, according to the prior art.

### Detailed description of the invention

Fig. 1 shows a profile provisioning platform PP according to an embodiment of the invention. The profile provisioning platform PP includes a profile database structured into a data generation IDSP, a data preparation SM-DP and a secure router SM-SR. The underlying structure of the exemplary database and its interfaces of Fig. 1, from which the present invention starts as a basis, are similar to the architecture of SGP.02. Other structures of the profile database and the interfaces are also suitable for applying the invention. The profile database stores data required to prepare profiles or/and profiles. The profile provisioning platform PP further comprises: at least one profile provider interface, which can be an ES2, ES4 or proprietary USAPI interface, allowing a profile provider to provide or input (donate) profile data or/and profiles to the profile database. At a further interface, which can be an ES2, ES4 or proprietary USAPI interface, a profile provider can send a profile order (request for a profile for a UICC) and/or information on an ordered profile, like profile number ICCID or chip identifier EID of a target UICC to the profile database. The profile provisioning platform PP further comprises: at least one use case owner interface, which is a proprietary USAPI interface, allowing a use case owner to send profile orders and/or information on an ordered profile, like profile number ICCID or chip identifier EID of a target UICC, to the profile database. The profile provisioning platform PP further comprises: at least one UICC requester interface, which is a proprietary USAPI interface, allowing a UICC requester to order a UICC, and send UICC information like an EIS or other metadata on a UICC to the profile database. The profile database of Fig. 1 allows access by at least two different profile providers or/and at least two different use case owners or/and at least two different UICC requesters. Herein, a business relation manager manages access of the different profile providers, use case owners and UICC requesters to data in the profile database. To achieve the managing, the business relation manager applies a set of access rules, allowing profile owners and partners or delegates of profile owners provided in the profile database to access the database according to the access rules. The access rules that the business relation manager applies may also imply business relation governance rules so as to allow or disallow access of certain profile providers, use case owners and UICC requesters to data in the profile database, particularly access to data provided by a party, namely profile provider, use case owner or UICC requester, different from the accessing party, namely profile provider, use case owner or UICC requester. An access layer manager, which can be implemented as an Application Programming Interface, API, manages physical access of profile providers, use case owners and UICC requesters to the profile provisioning platform.

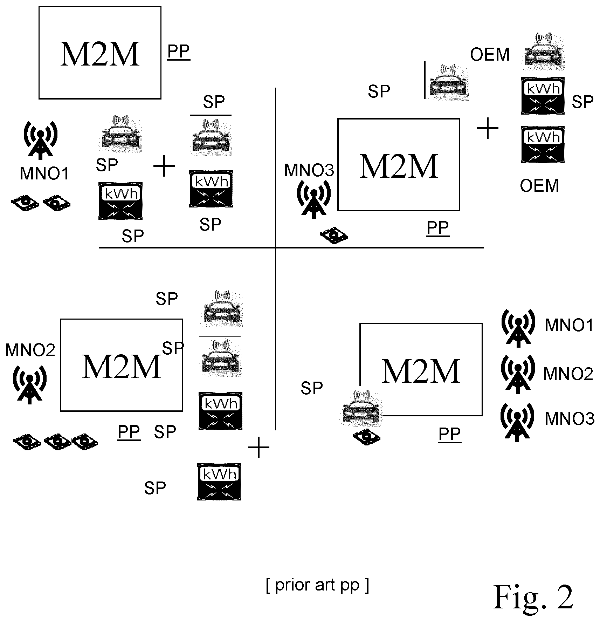

Fig. 2 shows a setup of four profile provisioning platform PP, according to the prior art. Each of the of four profile provisioning platform PP is dedicated to a particular combination of MNOs and service providers, SPs. The SPs can be for example car manufacturers, shown by a car, or industrial or smart home M2M service providers, SPs, shown by a kwh meter. In the setup of Fig. 2, three of the profile provisioning platforms PP are dedicated to only one MNO, MNO1, MNO2, MNO3, respectively, and to several SPs. The fourth profile provisioning platforms PP is dedicated to three MNOs, MNO1, MNO2, MNO3, and to only one SP. A setup combining several MNOs AND several SPs is not foreseen in the prior art.

Comparing Fig. 2 to Fig. 1, it is visible that the present invention contributes to reduce the complexity and number of required resource elements of a profile provisioning solution including multiple parties for each of the roles of a profile provider, use case owner and UICC requester. Thus, the risk of failures upon operation and maintenance is reduced, the effort and complexity for onboarding new parties to the profile provisioning solution is reduced. In consequence costs and time-to-market for setting up the profile provisioning platform as well as for onboarding (adding) new parties as new participants are reduced.

An exemplary implementation of access rules makes use of data information fields related to the data in which an owner of the data and a partner of the owner of the data are stored. For example, in data related to a profile of a UICC, which are embodied as a profile, the profile itself can comprise a data information field "Owner" which can be used to store an owner of the data, and a data information field "Partner" which can be used to store and a partner of the owner of the data, as follows:

### Profile:

### Owner=<mno-custid> e.g. MNO-Company-X

### Partner=<oem-custid> e.g. Carmaker-Y

In this example, the profile is owned by the MNO-Company-X, and the identifier "mno-custid" of MNO-Company-X is stored in the owner field of the profile information data of the profile. The owner MNO-Company-X has a partner Carmaker-Y, who is a carmaker and use case owner. Correspondingly, in a data field "Partner" of the profile information data of the profile, the identifier "oem-custid" of Carmaker-Y is stored.

According to a further example, access rules imply an owner of a profile, a partner of a profile owner, as above, and in addition a Whitelist of partners of partners. According to the further example, the data related to a profile of a UICC are embodied as an eUICC Information Set, EIS. The UICC is herein embodied as an eUICC. The owner, partner and Whitelist are stored in the EIS.

### eUICC EIS:

### Owner=<oem-custid> e.g. MNO-Company-X

### Partner=<partner-oem-custid> e.g. Carmaker-Y

MNO_DP_Whitelist=<mno-dp-custids-csv> e.g. MNO-Company-A/UICC-provider-U; or MNO-Company-B/ UICC-provider-V.

In this example, Carmaker-Y might want to have not only MNO-Company-X who is the owner of the profile, but in addition a different MNO, namely MNO-Company-A to provide connectivity. Accordingly, by the Whitelist, Carmaker-Y is allowed to allow to MNO-Company-A to use the profile data provided by MNO-Company-X to generate a profile to be used with the network of MNO-Company-A as the homenetwork, even though MNO-Company-A is not the owner of the profile data. In addition, a UICC-provider-U is allowed to be involved by Carmaker-Y.

Similarly, Carmaker-Y is allowed to use the profile data owned by MNO-Company-X for a use case involving an MNO-Company-B and a UICC-provider-V, which are to MNO-Company-X partners of its partner Carmaker-Y.

Further, the two above shown examples of a profile and an eUICC EIS can be combined with each other. The profile is owned by the MNO-Company-X, and the eUICC to which the profile shall be installed is owned by the Carmaker-Y. The MNO-Company-X lists in the profile itself as the owner and the Carmaker-Y as a partner. The owner-ID of the owner (MNO-Company-X) can be stored in an owner data field of the metadata of the profile, and the ID of the partner (Carmaker-Y) can be stored in a delegate-of-owner data field of the metadata of the profile.

In the EIS of the eUICC, the situation is the other way round as compared to the profile. In the EIS, the Carmaker-Y stores itself as the owner, and the MNO-Company-X as a partner. Also here, the owner-ID of the owner (Carmaker-Y) can be stored in an owner data field of the metadata of the EIS, and the ID of the partner (MNO-Company-X) can be stored in a delegate-of-owner data field of the metadata of the EIS.

When the MNO-Company-X or the Carmaker-Y seeks access to the profile or the EIS stored in the profile provisioning platform, it provides it identifier. The provided identifier is compared to an identifier stored in the owner and partner/delegate fields in the metadata of the profile or EIS. It is identified that the accessing MNO-Company-X or the Carmaker-Y is stored as owner or partner/delegate, and access to the profile or EIS is granted. In case a different MNO or Carmaker, with which no agreement exists, tries to access the profile or EIS, and provides its identifier, and the provided identifier is not found as stored in the metadata of the profile or EIS, neither in the owner data field, nor in a partner data field of the metadata, the access for the different MNO or Carmaker is denied.

### Cited documents

[1] SGP.02-v4.2, Remote Provisioning Architecture for Embedded UICC Technical Specification, Version 4.2, 07 July 2020
[2] SGP.22-v2.2.2, SGP.22 RSP Technical Specification, Version 2.2.2, 05 June 2020
[3] WO2019067244A1
[4] US2022/086621A1

## Claims

1. A profile provisioning platform (PP) comprising:
- a profile database storing data related to a profile for an UICC;
- at least one profile provider interface allowing a profile provider to exchange data with the profile database;
- at least one use case owner interface allowing a use case owner to exchange data with the profile database;
- at least one UICC requester interface allowing a UICC requester to exchange data with the profile database, said exchange including at least to request profiles or/and receive profiles from the profile database, wherein
- at one of the at least one UICC requester interfaces (USAPI), said exchange of data includes:
--- to provide a UICC request to the database, or/and
--- to provide metadata or other formal information on a UICC to the database,
--- to provide an EIS of a UICC to the database; and
- a business relation manager managing access of the different profile providers, use case owners and UICC requesters to data in the profile database based on access rules (AR) related to the data.

2. The profile provisioning platform (PP) according to claim 1, wherein the profile database allows access by at least two different profile providers or/and at least two different use case owners or/and at least two different UICC requesters.

3. The profile provisioning platform (PP) according to claim 1 or 2, wherein the business relation manager applies, as included in the access rules (AR), a set of business relation governance rules so as to allow or disallow access of certain profile providers, use case owners and UICC requesters to data in the profile database, particularly access to data provided by a party, namely profile provider, use case owner or UICC requester, different from the accessing party, namely profile provider, use case owner or UICC requester.

4. The profile provisioning platform (PP) according to any of claims 1 to 3, wherein, at the interfaces:
- at one of the at least one profile provider interfaces (USAPI, ES2, ES4), said exchange of data includes:
--- to provide profile data to the database, particularly provide an ICCID of a profile or/and a EID of a chip to the database, or/and
--- to provide profiles to the profile database; or/and
- at any one of the at least one profile provider interfaces (USAPI, ES2, ES4) or/and the at least one use case owner interfaces (USAPI), said exchange of data includes:
--- to provide a profile order or a UICC order to the profile database, wherein the profile order can include profile data, particularly an ICCID of a profile or/and an EID of a UICC, or/and
--- to retrieve profile data from the database, particularly retrieve an ICCID of a profile or/and an EID of a UICC from the database.

5. The profile provisioning platform (PP) according to any of claims 1 to 4, wherein:
- at least one profile provider interface is provided as an interface ES4 or ES2 according to GSMA SGP.02; and/or
- at least one UICC requester interface is provided by a proprietary interface USAPI; and/or
- at least one use case owner interface is provided by a proprietary interface USAPI.

6. The profile provisioning platform (PP) according to any of claims 1 to 5, comprising one or several of the following elements:
- a data generation instance (IDSP) allowing two or more different profile providers to input data related to profile for a UICC for data generation;
- a data preparation server (SM-DP) allowing two or more different profile providers to input profile data for data preparation;
- a secure router (SM-SR) allowing two or more UICC requesters to request profiles and receive profiles.

7. The profile provisioning platform (PP) according to any of claims 1 to 6, further comprising an access control layer manager managing physical access of profile providers, use case owners and UICC requesters to the profile provisioning platform.

8. The profile provisioning platform (PP) according to any of claims 1 to 7, wherein the access rules (AR) include any one or several of the following:
- one or several rules that access to data is allowed to an owner of the data and to partners or delegates, if any, of the owner of the data;
- a Whitelist of partners, and/or of partners of partners, for which access to data is allowed.

9. The profile provisioning platform (PP) according to claim 8, wherein an identifier of the owner of the data and identifiers of the partners are stored in data information fields related to the data.

10. The profile provisioning platform (PP) according to any of claims 1 to 9, wherein the data related to a profile for a UICC is or comprises either one or several of:
- profile data required to generate a profile, and which can include at least IMSI, Ki, ICCID;
- one or several profiles;
- one or several eUICC Information Sets, EISs, or one or several sets of metadata related to an UICC, particularly metadata similar to an EIS.

11. A method for provisioning data to a profile provisioning platform (PP) according to any of claims 1 to 10, comprising the steps:
- at one or several interfaces, selected from the profile provider interface, the use case owner interface and the UICC requester interface, receive data related to a profile for a UICC and access rules (AR) related to the data;
- store the received data to the profile database;
- implement the received access rules (AR) to the business relation manager.

12. The method according to claim 11, wherein the data related to a profile for a UICC is or comprises either one or several of:
- profile data required to generate a profile, and which can include at least IMSI, Ki, ICCID;
- one or several profiles;
- one or several eUICC Information Sets, EISs, or one or several sets of metadata related to an UICC, particularly metadata similar to an EIS.

13. A method for operating a profile provisioning platform (PP) according to any of claims 1 to 10, comprising the steps:
- at an interface, selected from the profile provider interface, the use case owner interface and the UICC requester interface, receive from a requesting party, being a profile provider, a use case owner or a UICC requester, a request for data to be output from the profile provisioning platform (PP) to a specified output interface;
- at the business relation manager, verify the access rules (AR), and output the requested data only under the condition the access rules (AR) allow providing the requested data to the specified output interface.

14. The method according to claim 13, wherein the specified output interface is:
- implicitly specified in that it is the interface at which the request is received; or
- explicitly specified as a particular interface, which can be the interface at which the request is received or a different interface.

15. The method according to claim 13 or 14, wherein the request for data is a profile order, the requested data is or comprises a profile to be provided to a target UICC.

## Patentansprüche

1. Profilbereitstellungsplattform (PP), umfassend:
- eine Profildatenbank, die Daten zu einem Profil für eine UICC speichert;
- mindestens eine Profilbereitsteller-Schnittstelle, die es einem Profilbereitsteller ermöglicht, Daten mit der Profildatenbank auszutauschen;
- mindestens eine Benutzungsfalleigentümer-Schnittstelle, die es einem Benutzungsfalleigentümer ermöglicht, Daten mit der Profildatenbank auszutauschen;
- mindestens eine UICC-Anforderer-Schnittstelle, die es einem UICC-Anforderer ermöglicht, Daten mit der Profildatenbank auszutauschen, wobei der Austausch mindestens das Anfordern von Profilen oder/und das Empfangen von Profilen aus der Profildatenbank umfasst, wobei
- an einer der mindestens einen UICC-Anforderer-Schnittstellen (USAPI) der Austausch von Daten beinhaltet:
--- eine UICC-Anfrage an die Datenbank zu stellen oder/und
--- Metadaten oder andere formale Informationen über eine UICC an die Datenbank bereitzustellen,
**---** eine EIS einer UICC an die Datenbank bereitzustellen; und
- einen Geschäftsbeziehungsmanager, der den Zugriff der verschiedenen Profilbereitsteller, Benutzungsfalleigentümer und UICC-Anforderer auf Daten in der Profildatenbank basierend auf Zugriffsregeln (AR), die sich auf die Daten beziehen, zu verwalten.

2. Profilbereitstellungsplattform (PP) nach Anspruch 1, wobei die Profildatenbank den Zugriff durch mindestens zwei verschiedene Profilbereitsteller oder/und mindestens zwei verschiedene Benutzungsfalleigentümer oder/und mindestens zwei verschiedene UICC-Anforderer erlaubt.

3. Profilbereitstellungsplattform (PP) nach Anspruch 1 oder 2, wobei der Geschäftsbeziehungsmanager, wie in den Zugriffsregeln (AR) enthalten, einen Satz von Regeln für die Verwaltung von Geschäftsbeziehungen anwendet, um den Zugriff von bestimmten Profilbereitstellern, Benutzungsfalleigentümern und UICC-Anforderern auf Daten in der Profildatenbank zu erlauben oder nicht zu erlauben, insbesondere den Zugriff auf Daten, die durch eine andere Partei, nämlich Profilbereitsteller, Benutzungsfalleigentümer oder UICC-Anforderer, die von der zugreifenden Partei, nämlich Profilbereitsteller, Benutzungsfalleigentümer oder UICC-Anforderer, verschieden ist, bereitgestellt werden.

4. Profilbereitstellungsplattform (PP) nach einem der Ansprüche 1 bis 3, wobei an den Schnittstellen:
- an einer der mindestens einen Profilbereitsteller-Schnittstellen (USAPI, ES2, ES4) der Austausch von Daten beinhaltet:
--- Profildaten an die Datenbank bereitzustellen, insbesondere eine ICCID eines Profils oder/und eine EID eines Chips an die Datenbank bereitzustellen, oder/und
**---** Profile an die Profildatenbank bereitzustellen; oder/und
- an einer der mindestens einen Profilbereitsteller-Schnittstellen (USAPI, ES2, ES4) oder/und der mindestens einen Benutzungsfalleigentümer-Schnittstellen (USAPI) der Austausch von Daten beinhaltet:
--- einen Profilauftrag oder einen UICC-Auftrag an die Profildatenbank bereitzustellen, wobei der Profilauftrag Profildaten, insbesondere eine ICCID eines Profils oder/und eine EID einer UICC, beinhalten kann, oder/und
**---** Profildaten aus der Datenbank abzurufen, insbesondere eine ICCID eines Profils oder/und eine EID einer UICC aus der Datenbank abzurufen.

5. Profilbereitstellungsplattform (PP) nach einem der Ansprüche 1 bis 4, wobei:
- mindestens eine Profilbereitsteller-Schnittstelle als Schnittstelle ES4 oder ES2 gemäß GSMA SGP.02 bereitgestellt wird; und/oder
- mindestens eine UICC-Anforderer-Schnittstelle durch eine proprietäre Schnittstelle USAPI bereitgestellt wird; und/oder
- mindestens eine Benutzungsfalleigentümer-Schnittstelle durch eine proprietäre Schnittstelle USAPI bereitgestellt wird.

6. Profilbereitstellungsplattform (PP) nach einem der Ansprüche 1 bis 5, umfassend eines oder mehrere der folgenden Elemente:
- eine Datenerzeugungsinstanz (IDSP), die es zwei oder mehr verschiedenen Profilbereitstellern erlaubt, Daten, die sich auf ein Profil für eine UICC beziehen, zur Datenerzeugung einzugeben;
- einen Datenvorbereitungsserver (SM-DP), der es zwei oder mehr verschiedenen Profilbereitstellern erlaubt, Profildaten zur Datenvorbereitung einzugeben;
- einen sicheren Router (SM-SR), der es zwei oder mehr UICC-Anforderern erlaubt, Profile anzufordern und Profile zu empfangen.

7. Profilbereitstellungsplattform (PP) nach einem der Ansprüche 1 bis 6, ferner einen Zugriffskontrollschichtmanager umfassend, der den physischen Zugriff von Profilbereitstellern, Benutzungsfalleigentümern und UICC-Anforderern auf die Profilbereitstellungsplattform verwaltet.

8. Profilbereitstellungsplattform (PP) nach einem der Ansprüche 1 bis 7, wobei die Zugriffsregeln (AR) eines oder mehrere der folgenden beinhalten:
- eine oder mehrere Regeln, dass der Zugriff auf die Daten einem Eigentümer der Daten und gegebenenfalls Partnern oder Beauftragten des Eigentümers der Daten erlaubt ist;
- eine Whitelist von Partnern und/oder von Partnern der Partner, für die der Zugriff auf Daten erlaubt ist.

9. Profilbereitstellungsplattform (PP) nach Anspruch 8, wobei eine Kennung des Eigentümers der Daten und Kennungen der Partner in Dateninformationsfeldern, die sich auf die Daten beziehen, gespeichert sind.

10. Profilbereitstellungsplattform (PP) nach einem der Ansprüche 1 bis 9, wobei die Daten, die sich auf ein Profil für eine UICC beziehen, entweder eines oder mehrere der folgenden sind oder umfassen:
- Profildaten, die zum Erzeugen eines Profils erforderlich sind und mindestens IMSI, Ki, ICCID beinhalten können;
- ein oder mehrere Profile;
- einen oder mehrere eUICC-Informationssätze, EISs oder einen oder mehrere Sätze von Metadaten, die sich auf eine UICC beziehen, insbesondere Metadaten ähnlich einem EIS.

11. Verfahren zum Bereitstellen von Daten an eine Profilbereitstellungsplattform (PP) nach einem der Ansprüche 1 bis 10, die Schritte umfassend:
- an einer oder mehreren Schnittstellen, ausgewählt aus der Profilbereitsteller-Schnittstelle, der Benutzungsfalleigentümer-Schnittstelle und der UICC-Anforderer-Schnittstelle, Daten, die sich auf ein Profil für eine UICC beziehen, und Zugriffsregeln (AR), die sich auf die Daten beziehen, zu empfangen;
- die empfangenen Daten in der Profildatenbank zu speichern;
- die empfangenen Zugriffsregeln (AR) für den Geschäftsbeziehungsmanager zu implementieren.

12. Verfahren nach Anspruch 11, wobei die Daten, die sich auf ein Profil für eine UICC beziehen, entweder eines oder mehrere der folgenden sind oder umfassen:
- Profildaten, die zum Erzeugen eines Profils erforderlich sind und mindestens IMSI, Ki, ICCID beinhalten können;
- ein oder mehrere Profile;
- einen oder mehrere eUICC-Informationssätze, EISs oder einen oder mehrere Sätze von Metadaten, die sich auf eine UICC beziehen, insbesondere Metadaten ähnlich einem EIS.

13. Verfahren zum Betreiben einer Profilbereitstellungsplattform (PP) nach einem der Ansprüche 1 bis 10, die Schritte umfassend:
- an einer Schnittstelle, die aus der Profilbereitsteller-Schnittstelle, der Benutzungsfalleigentümer-Schnittstelle und der UICC-Anforderer-Schnittstelle ausgewählt wird, von einer anfordernden Partei, bei der es sich um einen Profilbereitsteller, einen Benutzungsfalleigentümer oder einen UICC-Anforderer handelt, eine Anforderung von Daten, die von der Profilbereitstellungsplattform (PP) an eine bestimmte Ausgabeschnittstelle ausgegeben werden sollen, zu empfangen;
- beim Geschäftsbeziehungsmanager die Zugriffsregeln (AR) zu überprüfen und die angeforderten Daten nur unter der Bedingung auszugeben, dass die Zugriffsregeln (AR) das Bereitstellen der angeforderten Daten an die angegebene Ausgabeschnittstelle zu erlauben.

14. Verfahren nach Anspruch 13, wobei die angegebene Ausgabeschnittstelle:
- implizit dadurch angegeben ist, dass es sich um die Schnittstelle handelt, an der die Anforderung empfangen wird; oder
- explizit als eine bestimmte Schnittstelle angegeben ist, die die Schnittstelle, an der die Anforderung empfangen wird, oder eine andere Schnittstelle sein kann.

15. Verfahren nach Anspruch 13 oder 14, wobei die Datenanforderung ein Profilauftrag ist und die angeforderten Daten ein Profil sind oder umfassen, das an einer Ziel-UICC bereitgestellt werden soll.

## Revendications

1. Plateforme de fourniture de profils (PP) comprenant :
- une base de données de profils stockant des données relatives à un profil pour une UICC ;
- au moins une interface de fournisseur de profils permettant à un fournisseur de profils d'échanger des données avec la base de données de profils ;
- au moins une interface de propriétaire de cas d'utilisation permettant à un propriétaire de cas d'utilisation d'échanger des données avec la base de données de profils ;
- au moins une interface de demandeur d'UICC permettant à un demandeur d'UICC d'échanger des données avec la base de données de profils, ledit échange comprenant au moins la demande de profils et/ou la réception de profils depuis la base de données de profils, où
- au niveau de l'au moins une interface de demandeur d'UICC (USAPI), ledit échange de données comprend les étapes suivantes :
--- fournir une demande d'UICC à la base de données, et/ou
--- fournir des métadonnées ou d'autres informations formelles sur une UICC à la base de données,
--- fournir un EIS d'une UICC à la base de données ; et
- un gestionnaire de relations commerciales gérant l'accès des différents fournisseurs de profils, propriétaires de cas d'utilisation et demandeurs d'UICC aux données dans la base de données de profils sur la base de règles d'accès (AR) liées aux données.

2. Plateforme de fourniture de profils (PP) selon la revendication 1, dans laquelle la base de données de profils permet l'accès à au moins deux fournisseurs de profils différents et/ou au moins deux propriétaires de cas d'utilisation différents et/ou au moins deux demandeurs d'UICC différents.

3. Plateforme de fourniture de profils (PP) selon la revendication 1 ou la revendication 2, dans laquelle le gestionnaire des relations commerciales applique, comme prévu dans les règles d'accès (AR), un ensemble de règles de gouvernance des relations commerciales afin d'autoriser ou d'interdire l'accès de certains fournisseurs de profils, propriétaires de cas d'utilisation et demandeurs d'UICC aux données de la base de données de profils, en particulier l'accès aux données fournies par une partie, à savoir le fournisseur de profils, le propriétaire de cas d'utilisation ou le demandeur d'UICC, différente de la partie accédant, à savoir le fournisseur de profils, le propriétaire de cas d'utilisation ou le demandeur d'UICC.

4. Plate-forme de fourniture de profils (PP) selon l'une quelconque des revendications 1 à 3, dans laquelle, au niveau des interfaces :
- au niveau de l'au moins une interface de fournisseur de profils (USAPI, ES2, ES4), ledit échange de données comprend les étapes suivantes :
--- fournir des données de profil à la base de données, en particulier fournir un ICCID d'un profil et/ou un EID d'une puce à la base de données, ou/et
--- fournir des profils à la base de données de profils ; ou/et
- au niveau de l'une quelconque de l'au moins une interface de fournisseur de profils (USAPI, ES2, ES4) ou/et de l'au moins une interface de propriétaire de cas d'utilisation (USAPI), ledit échange de données comprend les étapes suivantes :
--- fournir une commande de profil ou une commande UICC à la base de données de profils, où la commande de profil peut inclure des données de profil, en particulier un ICCID d'un profil et/ou un EID d'une UICC, ou/et
**---** récupérer des données de profil auprès de la base de données, en particulier récupérer un ICCID d'un profil et/ou un EID d'une UICC auprès de la base de données.

5. Plate-forme de fourniture de profils (PP) selon l'une quelconque des revendications 1 à 4, dans laquelle :
- au moins une interface de fournisseur de profils est fournie en tant qu'interface ES4 ou ES2 selon la norme GSMA SGP.02 ; et/ou
- au moins une interface de demandeur d'UICC est fournie par une interface propriétaire USAPI ; et/ou
- au moins une interface de propriétaire de cas d'utilisation est fournie par une interface propriétaire USAPI.

6. Plateforme de fourniture de profils (PP) selon l'une quelconque des revendications 1 à 5, comprenant un ou plusieurs des éléments suivants :
- une instance de génération de données (IDSP) permettant à deux, ou davantage, fournisseurs de profils différents d'entrer des données relatives à un profil pour une UICC à des fins de génération de données ;
- un serveur de préparation de données (SM-DP) permettant à deux, ou davantage, fournisseurs de profils différents d'entrer des données de profil à des fins de préparation de données ;
- un routeur sécurisé (SM-SR) permettant à deux, ou davantage, demandeurs d'UICC de demander des profils et de recevoir des profils.

7. Plateforme de fourniture de profils (PP) selon l'une quelconque des revendications 1 à 6, comprenant en outre un gestionnaire de couche de contrôle d'accès gérant l'accès physique des fournisseurs de profils, des propriétaires de cas d'utilisation et des demandeurs d'UICC à la plateforme de fourniture de profils.

8. Plateforme de fourniture de profils (PP) selon l'une quelconque des revendications 1 à 7, dans laquelle les règles d'accès (AR) comprennent l'une ou plusieurs des règles suivantes :
- une ou plusieurs règles selon lesquelles l'accès aux données est autorisé au propriétaire des données et aux partenaires ou délégués, le cas échéant, du propriétaire des données ;
- une liste blanche de partenaires et/ou de partenaires de partenaires auxquels l'accès aux données est autorisé.

9. Plateforme de fourniture de profils (PP) selon la revendication 8, dans laquelle un identifiant du propriétaire des données et les identifiants des partenaires sont stockés dans des champs d'informations de données liés aux données.

10. Plateforme de fourniture de profils (PP) selon l'une quelconque des revendications 1 à 9, dans laquelle les données relatives à un profil pour une UICC sont ou comprennent un ou plusieurs des éléments suivants :
- des données de profil nécessaires pour générer un profil, et qui peuvent inclure au moins l'IMSI, le Ki, l'ICCID ;
- un ou plusieurs profils ;
- un ou plusieurs ensembles d'informations eUICC, EIS, ou un ou plusieurs ensembles de métadonnées liées à une UICC, en particulier des métadonnées similaires à un EIS.

11. Procédé de fourniture de données à une plate-forme de fourniture de profils (PP) selon l'une quelconque des revendications 1 à 10, comprenant les étapes suivantes :
- au niveau d'une ou plusieurs interfaces, sélectionnées parmi l'interface du fournisseur de profils, l'interface du propriétaire du cas d'utilisation et l'interface du demandeur d'UICC, recevoir des données relatives à un profil pour une UICC et des règles d'accès (AR) relatives aux données ;
- stocker les données reçues dans la base de données de profils ;
- mettre en œuvre les règles d'accès (AR) reçues dans le gestionnaire de relations commerciales.

12. Procédé selon la revendication 11, dans lequel les données relatives à un profil pour une UICC sont ou comprennent un ou plusieurs des éléments suivants :
- des données de profil nécessaires pour générer un profil, et qui peuvent inclure au moins l'IMSI, le Ki, l'ICCID ;
- un ou plusieurs profils ;
- un ou plusieurs ensembles d'informations eUICC, EIS, ou un ou plusieurs ensembles de métadonnées liées à une UICC, en particulier des métadonnées similaires à un EIS.

13. Procédé pour exploiter une plate-forme de fourniture de profils (PP) selon l'une quelconque des revendications 1 à 10, le procédé comprenant les étapes suivantes :
- au niveau d'une interface, sélectionnée parmi l'interface du fournisseur de profils, l'interface du propriétaire du cas d'utilisation et l'interface du demandeur d'UICC, recevoir d'une partie requérante, qui est un fournisseur de profils, un propriétaire de cas d'utilisation ou un demandeur d'UICC, une demande de données à fournir par la plateforme de fourniture de profils (PP) à une interface de sortie spécifiée ;
- au niveau du gestionnaire de relations commerciales, vérifier les règles d'accès (AR) et fournir les données demandées uniquement si les règles d'accès (AR) autorisent la fourniture des données demandées à l'interface de sortie spécifiée.

14. Procédé selon la revendication 13, dans lequel l'interface de sortie spécifiée est :
- implicitement spécifiée en ce qu'il s'agit de l'interface au niveau de laquelle la demande est reçue ; ou
- explicitement spécifiée comme une interface particulière, qui peut être l'interface à laquelle la demande est reçue ou une interface différente.

15. Procédé selon la revendication 13 ou la revendication 14, dans lequel la demande de données est une commande de profil, les données demandées sont ou comprennent un profil à fournir à une UICC cible.
